Europäisches Patentamt

European Patent Office

Office européen des brevets

(19)

(11) EP 1 207 341 A2

(12) EUROPEAN PATENT APPLICATION

(43) Date of publication:
22.05.2002 Bulletin 2002/21

(51) Int Cl.7: **F23G 7/12**, F23L 7/00, F23G 5/46

(21) Application number: 01126575.8

(22) Date of filing: 14.07.1995

(84) Designated Contracting States:
**BE DE ES FR GB IT NL**

(30) Priority: **11.10.1994 JP 24502894**

(62) Document number(s) of the earlier application(s) in accordance with Art. 76 EPC:
**95111105.3 / 0 693 539**

(71) Applicant: **MITSUBISHI JUKOGYO KABUSHIKI KAISHA**
**Tokyo 100 (JP)**

(72) Inventors:
• **Arima, Kenichi, Nagasaki R&D Center**
**Nagasaki-shi, Nagasaki-ken (JP)**
• **Soda, Masahiro, Nagasaki R&D Center**
**Nagasaki-shi, Nagasaki-ken (JP)**

• **Yamamoto, Hisao**
**Nagasaki-shi, Nagasaki-ken (JP)**
• **Sakai, Masayasu**
**Nagasaki-shi, Nagasaki-ken (JP)**
• **Ohta, Hideaki, Nagasaki R&D Center**
**Nagasaki-shi, Nagasaki-ken (JP)**
• **Fujioka, Yuichi, Nagasaki R&D Center**
**Nagasaki-shi, Nagasaki-ken (JP)**

(74) Representative: **Behrens, Dieter, Dr.-Ing.**
**Wuesthoff & Wuesthoff**
**Patent- und Rechtsanwälte**
**Schweigerstrasse 2**
**81541 München (DE)**

Remarks:
This application was filed on 15 - 11 - 2001 as a divisional application to the application mentioned under INID code 62.

(54) **Method for the combustion of organic waste in a combustion furnace**

(57) Method for burning organic waste such as scrap tires and waste plastics for various purposes in a furnace with a combustion-support gas which is either a mixture of air and steam or a mixture of air, steam and combustion exhaust gas and which has an oxygen concentration of 10 to 21 %.

Fig. 1

101 ORGANIC WASTE

103 AIR

102 FURNACE

104 COMBUSTION GAS
105 STEAM

108 COMBUSTION GAS

109 HEAT EXCHANGER → 110 STEAM

111 COMBUSTION GAS

112 POLLUTION CONTROL APPARATUS

113 TREATED EXHAUST GAS

**Description**

BACKGROUND OF THE INVENTION

1. Field of the Invention

The present invention generally relates to combustion of organic waste such as scrap tires and waste plastics in a combustion furnace. More specifically, the invention relates to a method for the combustion of organic waste which makes it possible to achieve smooth combustion without forming soot and tar or leaving unburned fixed carbon and also to recover energy by steam generation or the like.

2. Description of the Related Art

Conventionally, organic waste such as scrap tires and waste plastics is burned with a combustion-support gas comprising air or a mixture of air and combustion exhaust gas.

When scrap tires are taken as an example of organic waste, they are composed of 50-60 % of volatiles, 20-30 % of fixed carbon, and 10-15 % of inorganic matter such as steel and ash, as shown in Table 1. Since scrap tires include steel wires, it is difficult to crush them into small pieces. Accordingly, it has been conventional practice to burn whole scrap tires in a stoker or kiln or to crush scrap tires to about 10 cm cubes and burn them in a stoker or kiln. However, these combustion methods involve the following problems:

(1) If scrap tires are burned with the aid of air, volatiles present therein decompose and burn rapidly. As a result, a high temperature of 1,500°C or above is attained locally, tending to cause damage to the furnace. Moreover, large amounts of soot and tar are produced from the flame, requiring after-treatment.

(2) The fixed carbon remaining after the evaporation of volatiles has such a low burning rate that it may form a residue in admixture with inorganic matter. This residue is not easy to dispose of.

(3) On the other hand, if scrap tires are burned with a gaseous mixture of air and combustion exhaust gas, the problem described in the above paragraph (1) is alleviated. However, the problem described in the above paragraph (2) is aggravated owing to an increase in residual fixed carbon. Thus, it is impossible to have an overall solution.

For these reasons, it is difficult to dispose of organic waste such as scrap tires. In the present state of the art, it has been impossible to reclaim resources from such waste.

Table 1:

| Composition of tires | | |
|---|---|---|
| Component | | Content (%) |
| Volatiles | Raw rubber | 40-50 |
| | Oil | 5-10 |
| Fixed carbon | | 20-30 |
| Steel & ash | | 10-15 |

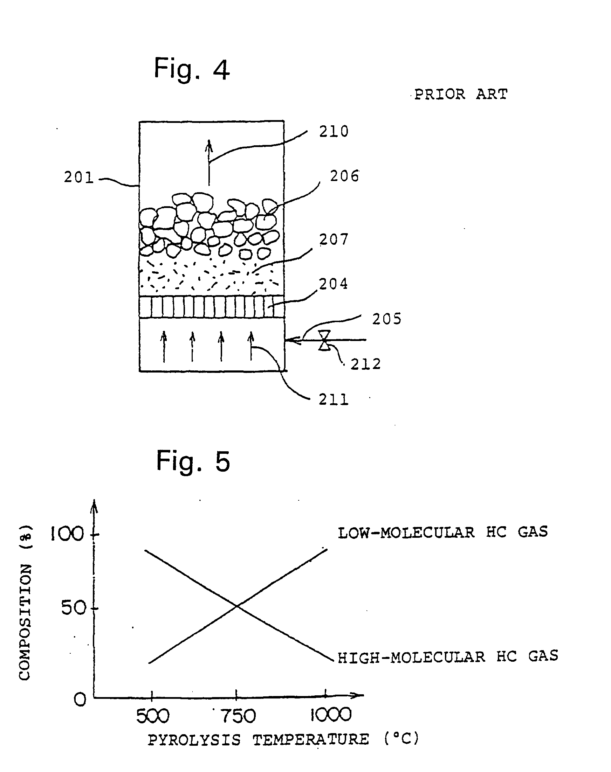

An example of a conventional fixed-bed gasification furnace for gasifying organic waste such as scrap tires and waste plastics is illustrated in Fig. 4. In the fixed-bed gasification furnace 201 of Fig. 4, volatiles present in organic waste 206 fed from above are pyrolyzed and gasified by the heat evolved as a result of the partial combustion of fixed carbon present in the underlying residue, thus yielding a residue 207 consisting largely of fixed carbon. The fixed carbon present in residue 207 is partially burned and gasified with a gasifying agent 211 which is a mixture of an oxygen-containing gas and steam and which is supplied to a space below a perforated plate 204 through a valve 212, and the fixed carbon serves to supply the heat required to pyrolyze the volatiles. The gas produced by the pyrolysis and gasification of volatiles and the gas produced by the gasification of fixed carbon are mixed together and withdrawn as an organic waste-gasified gas 210. The reactions occurring during this process are represented by the following equations (1), (2) and (3).

$$C + O_2 ---> CO + CO_2 + Q_1 \text{ (exothermic)} \tag{1}$$

(Supply of the heat of reaction by the partial combustion and gasification of fixed carbon)

$$C + H_2O \dashrightarrow CO + H_2 -Q_3 \text{ (endothermic)} \qquad (2)$$

(Gasification by the reaction of fixed carbon with steam)

$$C_nH_m \dashrightarrow C_{n1}H_{m1} - Q_2 \text{ (endothermic)}$$

$$(n > n1, m > m1) \qquad (3)$$

(Pyrolysis and gasification of volatiles)

If the pyrolysis temperature of volatiles is high (e.g., 700°C or above), C-C bonds are severed extensively, so that a low-molecular hydrocarbon gas consisting of low-molecular components such as methane ($CH_4$), ethane ($C_2H_6$) and ethylene ($C_2H_4$) are produced in high proportions. On the other hand, if the pyrolysis temperature is low (e.g., 500-700°C), a high-molecular hydrocarbon gas containing aromatic compounds such as benzene ($C_6H_6$), toluene ($C_7H_8$) and naphthalene ($C_{10}H_8$) is produced. This situation is schematically shown in Fig. 5.

When a gas obtained by the gasification of organic waste is used as the raw material for the formation of carbon black, the gas produced in the gasification furnace is introduced into a combustion furnace for the formation of carbon black, and burned in a low-oxygen environment to form carbon black. During this process, a gas consisting of low-molecular components is predominantly burned by reaction with oxygen, creating a high-temperature field. In this high-temperature field, a high-molecular hydrocarbon gas undergoes dehydrogenation and polycondensation repeatedly and thereby grows to form carbon black. That is, in order to enhance the yield of carbon black, it is preferable to increase the content of high-molecular components, such as naphthalene ($C_{10}H_8$) and anthracene ($C_{14}H_{10}$), in the gas obtained by the gasification of organic waste. To this end, it is preferable to carry out the pyrolysis of volatiles at a temperature of 500-700°C.

If the pyrolysis temperature is higher than 700°C, C-C bonds present in volatiles will be severed extensively to produce low-molecular hydrocarbons, such as methane ($CH_4$), ethane ($C_2H_6$) and ethylene ($C_2H_4$). If it is lower than 500°C, the pyrolysis will not proceed satisfactorily.

Usually, the quantity of heat required to pyrolyze and gasify volatiles at a temperature of 500-700°C will be only about 5-10 of the total quantity of heat possessed by organic waste. Where the content of fixed carbon in organic waste is high (e.g., 20 %), the combustion of all fixed carbon will evolve an excessive quantity of heat.

Thus, where it is desired to produce a high-molecular hydrocarbon gas from volatiles in the gasification of organic waste, the following problems arise. They make it difficult to control the pyrolysis temperature of volatiles so as to remain in an appropriate range.

(1) If the feed rate of oxygen is reduced to decrease the amount of fixed carbon undergoing partial combustion (i. e., the heat of combustion, $Q_1$, of fixed carbon) and thereby lower the pyrolysis temperature, a residue containing fixed carbon is left. This residue is not easy to dispose of.

(2) Contrary, if fixed carbon is partially burned at a sufficiently high feed rate of oxygen so as not to leave any residual fixed carbon, the heat of combustion is increased to raise the pyrolysis temperature. As a result, a high-molecular hydrocarbon gas cannot be obtained.

(3) The reaction temperature can be lowered by adding steam to the gasifying agent. However, if the feed rate of steam is raised to increase the quantity of heat ($Q_3$) absorbed by the reaction of fixed carbon with steam, fixed carbon and unreacted steam react with the high-molecular hydrocarbon gas produced by the pyrolysis of volatiles, resulting in the formation of low-molecular hydrocarbons.

$$C_{n1}H_{m1} + H_2O \dashrightarrow C_{n2}H_{m2} + CO + H_2 - Q_4$$

$$(n1 > n2, m1 > m2) \qquad (4)$$

Furthermore, as noted above, a proper temperature control is required to obtain a gas having a composition suitable for use as the raw material for the production of carbon black. In conventional fixed-bed gasification furnaces, the feed rate of the whole gasifying agent is usually controlled in response to the height of the organic waste layer within the furnace and this involves the following problems.

If the feed rate of organic waste varies, the resulting change in the feed rate of the gasifying agent is delayed because of the time lag of the change in the height of the organic waste layer. This causes the gasifying agent/organic waste ratio to become unbalanced. As a result, the supply of heat by the partial combustion and gasification of fixed carbon according to the above equations (1) and (2) also becomes unbalanced, so that the internal temperature of the gasification furnace may be fluctuated. Thus, the pyrolysis temperature of volatiles depending on equation (3) may be fluctuated to depart from its appropriate range. That is, if the feed rate of organic waste decreases, the gasifying agent/ organic waste ratio temporarily becomes unduly high, resulting a rise in pyrolysis temperature. Contrarily, if the feed rate of organic waste increases, the gasifying agent/organic waste ratio temporarily becomes unduly low, resulting a reduction in pyrolysis temperature. Consequently, the properties of the resulting organic waste- gasified gas are fluctuated, bringing about unstable operation of the succeeding process (such as carbon black production process) using that gas.

Also, in order to hold down the pyrolysis temperature of volatiles, the partial combustion/gasification temperature of fixed carbon needs to be held down. Since the reaction rate of fixed carbon is reduced thereby, the organic waste layer becomes thick, requiring a large-sized fixed-bed gasification furnace.

## SUMMARY OF THE INVENTION

An object of the present invention is to provide a method for the combustion of organic waste which can solve the problems of the conventional art.

According to the present invention, there are provided:

(1) a method for the combustion of organic waste which comprises burning organic waste in a combustion furnace with a combustion-support gas prepared by mixing air and steam or mixing air, steam and combustion exhaust gas so as to have an oxygen concentration of 10 to 21 %; and

(2) a method for the combustion of organic waste which comprises passing the combustion exhaust gas produced by the method of (1) above through a heat exchanger to recover thermal energy therefrom in the form of steam, and using a portion of a resulting steam for the combustion-support gas to be fed to the combustion furnace.

The mechanism of the combustion of organic waste in air is as follows:

(1) The surfaces of organic waste are heated by heat radiation and heat transfer from a flame, so that the organic waste is pyrolyzed to form hydrocarbon radicals ($\cdot C_{n1}H_{m1}$) according to equation (15).

$$C_nH_m \text{---> } \cdot C_{n1}H_{m1} - Q_1 \text{ (n > n1, m > m1)} \qquad (5)$$

(2) Hydrocarbon radicals ($\cdot C_{n1}H_{m1}$) react with oxygen diffusing from the surroundings to form a flame [equation (6)]. During this process, if the rate of formation of hydrocarbon radicals is high, the diffusion of oxygen becomes insufficient. As a result, the polycondensation reaction of hydrocarbon radicals takes place, producing soot and tar [equation (7)].

$$\cdot C_{n1}H_{m1} + 0_2 \text{ (much)---> } CO_2 + H_2O + Q_2 \qquad (6)$$

$$\cdot C_{n1}H_{m1} + 0_2 \text{ (a little)---> } CH_x \text{ (x<<1)} + H_2O + Q_3 \qquad (7)$$

(3) On the other hand, fixed carbon present in organic waste has a low reaction rate and, moreover, hydrocarbon radicals take oxygen away. Consequently, it is quite likely that fixed carbon remains unreacted.

In contrast, the combustion method of the present invention uses, instead of air, a combustion-support gas prepared by mixing air and steam or mixing air, steam and combustion exhaust gas so as to give an oxygen concentration of 10 to 21 %, and hence has the following effects.

(1) Since the heat of reaction of hydrocarbon radicals with oxygen is absorbed not only by nitrogen in air, but also by steam and carbon dioxide, the overall quantity of heat absorbed is increased to cause a reduction in flame temperature.

(2) Accordingly, the rate of formation of hydrocarbon radicals is reduced. This allows oxygen to diffuse sufficiently and thereby suppresses the production of soot and tar.

(3) Fixed carbon is also burned as a result of the sufficient diffusion of oxygen. Moreover, fixed carbon reacts with steam to produce carbon monoxide and hydrogen, which are then burned [equations (18) and (19)].

$$C + H_2O ---> CO + H_2 - Q_4 \qquad (8)$$

$$CO + H_2 + O_2 ---> CO_2 + H_2O + Q_5 \qquad (9)$$

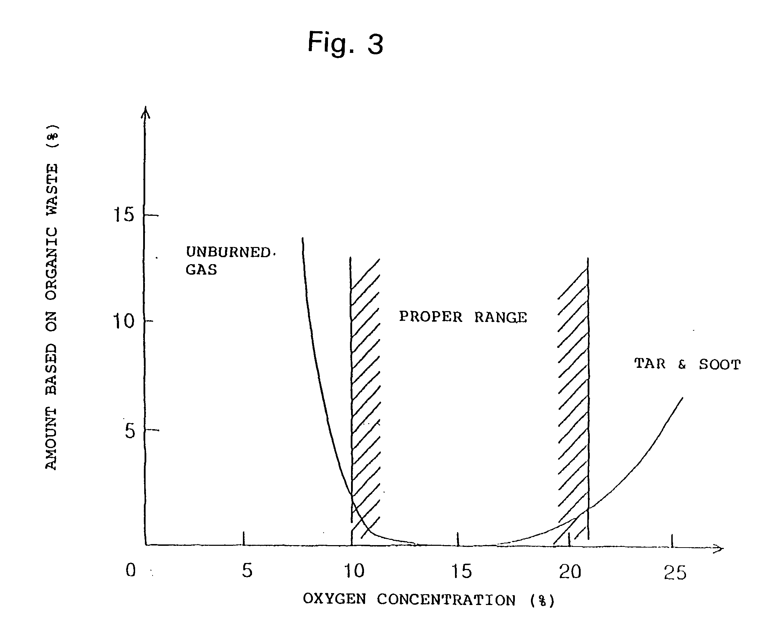

However, if the oxygen concentration is less than 10 %, the hydrocarbon radicals formed by pyrolysis and the carbon monoxide and hydrogen produced by the reaction of fixed carbon with steam do not reach the explosion limit, so that they are not burned but discharged as an unburned gas. That is, the relationship between the oxygen concentration and the amount of soot and tar produced or the amount unburned gas produced is as shown in Fig. 3, which indicate that the appropriate range of the oxygen concentration is from 10 to 21 %.

The method according to the present invention makes it possible to burn organic waste without producing soot or tar, without leaving any residual fixed carbon, and without causing damage to the furnace owing high temperatures.

BRIEF DESCRIPTION OF THE DRAWINGS

Fig. 1 is a block diagram illustrating one embodiment of the method for the combustion of organic waste in accordance with the present invention;

Fig. 2 is a schematic diagram illustrating an exemplary combustion furnace for carrying out the combustion method of the present invention;

Fig. 3 is a graph schematically showing the relationship between the concentration of oxygen during combustion of organic waste and the amount of soot and tar produced or the amount of unburned gas components produced;

Fig. 4 is a schematic representation of an example of a conventional furnace for the gasification of organic waste; and

Fig. 5 is a graph schematically showing the relationship between the pyrolysis temperature of organic waste and the composition of the gas so produced.

DETAILED DESCRIPTION OF THE PREFERRED EMBODIMENTS

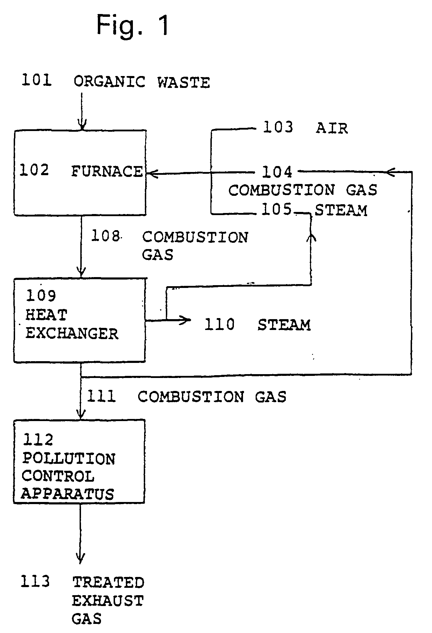

In the following, one embodiment of the method for the combustion of organic waste in accordance with the present invention is described hereinbelow with reference to Fig. 1. According to the combustion method of the invention, organic waste 101 is burned in a combustion furnace 2 which is supplied with a combustion-support gas prepared by mixing air 103, steam 105 and, if necessary, combustion exhaust gas 104, so as to give a predetermined oxygen concentration, as shown in Fig. 1. The combustion gas 108 so produced is passed through a heat exchanger 109 where thermal energy is recovered in the form of steam 110, and a portion of steam 110 is supplied to combustion furnace 102. Moreover, a portion of the resulting combustion exhaust gas 111 is supplied to combustion furnace 102 as required, and the remainder is subjected to pollution control treatments (such as dust removal and desulfurization) by means of a pollution control apparatus 112 and then discharged into the atmosphere as a treated exhaust gas 113.

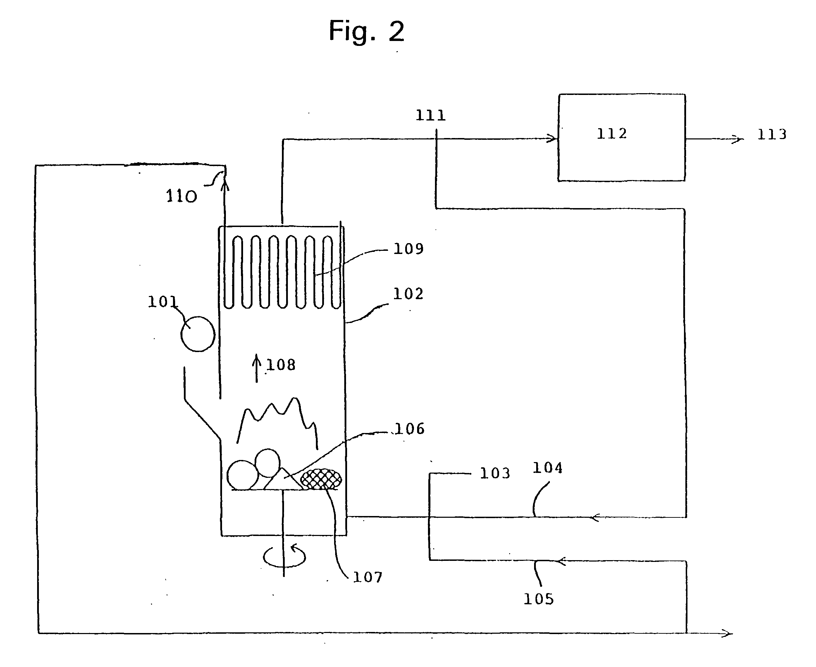

Fig. 2 is a schematic diagram illustrating an exemplary combustion furnace for carrying out the method for the combustion of organic waste in accordance with the present invention.

In Fig. 2, organic waste 101, such as scrap tires and waste plastics, is fed to a combustion furnace 102. On the other hand, air 103 and steam 105 are supplied to combustion furnace 102 from the underside of a stoker 106. The oxygen concentration should be adjusted to 10-21 %. For example, an oxygen concentration of 15 % is obtained by supplying air and steam at a ratio of 1:0.5. If necessary, combustion exhaust gas 104 may be added for the purpose of adjusting the oxygen concentration.

The preferred gas for use in the adjustment of the oxygen concentration is steam. The reason for this is that steam reacts with and gasifies fixed carbon according to the above equation (18), the resulting high endotherm is highly effective in reducing the temperature of the combustion field, and the CO and $H_2$ so produced can be easily subjected to complete combustion in the presence of oxygen. However, steam is usually supplied from a boiler installed behind. If the amount of steam used is too large, the amount of steam which can be utilized effectively is decreased. In such a case, a part of the steam may be replaced by combustion exhaust gas.

Under these conditions, organic waste 101 is completely burned without producing soot or tar and without leaving any residual fixed carbon. The only residue on stoker 106 is inorganic matter 107, which is withdrawn later. The combustion temperature is in the range of 1,000 to 1,500°C.

Energy is recovered from combustion gas 108 by generating steam 110 by means of a heat exchanger 109. A part of the steam so generated can be used as steam 105 to be supplied to combustion furnace 102.

The resulting combustion exhaust gas 111 is further treated in a pollution control apparatus and discharged into the atmosphere as a treated exhaust gas 113. If necessary, a part of this combustion exhaust gas 111 is used as combustion exhaust gas 104 to be supplied to combustion furnace 102.

The method of the present invention is more specifically explained with reference to the following examples.

(Example 1)

Using the combustion furnace (3 m in diameter and 7 m in height) illustrated in Fig. 2, scrap tires (composed of 50-60 % of volatiles, 20-30 % of fixed carbon, and 10-15 % of inorganic matter) were subjected to a combustion test.

Scrap tires were burned with a combustion-support gas prepared by mixing air and steam at a ratio of 1:0.5 so as to give an oxygen concentration of 15 % or by mixing air, steam and combustion exhaust gas at a ratio of 1:0.25: 0.25 so as to give an oxygen concentration of 15 %. The feed rates of scrap tires and air were 1 t/h and 12 t/h, respectively.

In either case, the combustion temperature was in the range of 1,000-1,500°C. The combustion exhaust gas consisted largely of $CO_2$, $H_2O$ and $N_2$, showing no production of soot or tar. The combustion residue consisted entirely of steel and inorganic components present in tires, showing no residual fixed carbon. Thus, there were obtained good combustion results. In the case where air, steam and combustion exhaust gas were used as described above, about 7 t/h (7 kgf/cm$^2$, 180°C) of steam was recovered.

(Example 2)

In the combustion test of Example 1, steam (at 500°C) generated by heat exchange with the combustion exhaust gas used as the steam to be added to the combustion-support gas. As a result, similarly good combustion results were obtained.

**Claims**

1. Method for the combustion of organic waste in a combustion furnace with a combustion-support gas which is either a mixture of air and steam or a mixture of air, steam and combustion exhaust gas and which has an oxygen concentration of 10 to 21 %.

2. Method for the combustion of organic waste which comprises passing combustion exhaust gas produced by the method of claim 1 through a heat exchanger to recover thermal energy therefrom in the form of steam, and using a portion of the resulting steam for the combustion-support gas to be fed to the combustion furnace.

# Fig. 1

101   ORGANIC WASTE

103   AIR

102   FURNACE   ← 104
COMBUSTION GAS
105   STEAM

108   COMBUSTION
GAS

109
HEAT
EXCHANGER   → 110   STEAM

111   COMBUSTION GAS

112
POLLUTION
CONTROL
APPARATUS

113   TREATED
EXHAUST
GAS

# Fig. 2

Fig. 3

# Fig. 4

# Fig. 5